# EUROPÄISCHE PATENTSCHRIFT

(11) **EP 3 124 231 B1**
(45) Veröffentlichungstag und Bekanntmachung des Hinweises auf die Patenterteilung: **01.10.2025**
(21) Anmeldenummer: 16187343.5
(22) Anmeldetag: 26.05.2014
(51) Int. Cl.: B32B 17/06, B32B 17/10, E06B 5/16

(54) **BRANDSCHUTZVERGLASUNG UND VERFAHREN ZUR HERSTELLUNG EINER BRANDSCHUTZVERGLASUNG**
FIRE PROTECTION GLAZING AND METHOD FOR PRODUCING FIRE PROTECTION GLAZING
VITRAGE IGNIFUGE ET SON PROCEDE DE FABRICATION

(30) Priorität: 29.05.2013 CH 10322013
(43) Veröffentlichungstag der Anmeldung: 01.02.2017
(62) Teilanmeldung aus: 14727386.6
(73) Patentinhaber: SAINT-GOBAIN GLASS FRANCE, 92400 Courbevoie (FR)
(72) Erfinder: TE STRAKE, David, 52070 Aachen (DE); GELDERIE, Udo, verstorben (DE)
(74) Vertreter: Frei Patent Attorneys

(56) Entgegenhaltungen:
- WO-A1-03/061963
- WO-A1-2013/124661
- DE-C1- 4 001 677
- DE-T2- 69 316 816
- US-A- 4 264 681
- US-A- 5 624 998

## Beschreibung

Die Erfindung betrifft das Gebiet der Brandschutzverglasung. Sie bezieht sich auf eine Brandschutzverglasung mit einer zwischen zwei transparenten Trägern (bspw. Glasscheiben) angeordneten transparenten Brandschutzschicht.

Bei einer Brandschutzverglasung mit zwischen transparenten Trägern (insbesondere Glasscheiben) angeordneter Brandschutzschicht zerspringt die dem Feuer zugewandte Seite des Glases und es setzt im Brandfall eine Aufschäumung und/oder Trübung der Brandschutzschicht ein. Die Brandschutzschicht wirkt dann kühlend und/oder isolierend beziehungsweise reflektierend. Diese Brandschutzschicht kann beispielsweise auf Basis von Silikaten oder auf Basis von Hydrogelen aufgebaut sein. Beide haben ihre Vor- und Nachteile.

Eine feuerhemmende Verglasung auf Basis von Hydrogelen ist beispielsweise in DE 2713849 beschrieben, bei der ein Raum zwischen wenigstens zwei parallelen Glasscheiben mit einem Gel gefüllt ist. Das Gel wird bei der Polymerisation von Methacrylamid und Acrylamid gebildet, wobei die Polymerisation mit Hilfe von Peroxyden oder Persalzen unter Zugabe eines Beschleunigungsmittels (z.B. Diethylaminopropionitril) und gegebenenfalls eines Vernetzungsmittels (z.B. Methylenbisacrylamid, MBA) erfolgt.

DE 10237395 beschreibt ein Verfahren zur Herstellung einer Brandschutzverglasung, wobei eine Brandschutzzusammensetzung zwischen zwei benachbarten Glasscheiben erzeugt wird. Die Brandschutzzusammensetzung bildet sich durch die Polymerisation von Acrylsäure und/oder Methacrylsäure und/oder deren jeweilige Alkalisalze und/oder Ammoniumsalze der Acrylsäure, dabei wird zusätzlich eine Salzlösung, ein Polymerisationsinitiators und ein Vernetzungsmittel verwendet, wobei basische Salzlösungen als bevorzugt angegeben werden. Ähnliches ist auch in WO 03/061963, DE 4001677 und DE 6916816 beschrieben.

Bisher bekannte Hydrogele sind teilweise aus toxischen oder cancerogen oder mutagenen Rohstoffen aufgebaut (z.B. auf Basis von Acrylamid/DE 2713849) oder es werden Rohstoffe (wasserlösliche Monomere) verwendet, die vorzugweise im Alkalischen polymerisieren. Hohe pH-Werte können jedoch unerwünschte Reaktionen mit Glasoberflächen hervorrufen (Glaskorrosion) und damit zu Trübungen führen. Ein weiterer Nachteil der bislang verwendeten Hydrogele ist deren schlechte Haftung zur Glasoberfläche. Insbesondere durch Hydrolyse-Reaktionen durch hohe pH-Werte werden chemische Bindungen zur Glasoberfläche entweder zerstört oder kommen gar nicht erst zustande.

Es sind auch Hydrogele bekannt, die auf Basis von Methylolacrylamid hergestellt werden. Methylolacrylamid kann beispielsweise aus den Ausgangstoffen Acrylamid und Formaldehyd dargestellt werden, wobei beide Ausgangstoffe gesundheitsbedenkliche Substanzen sind. Sie wurden als SVHC (Substance of Very High Concern, besonders besorgniserregender Stoffe) eingestuft. SVHCs sind chemische Verbindungen (oder Teil einer Gruppe von chemischen Verbindungen), welche unter der REACH-Verordnung (Registration, Evaluation, Authorisation and Restriction of Chemicals) mit besonders gefährlichen Eigenschaften identifiziert worden sind. Daher wird Acrylamid auch als arcinogen und mutagen zu bezeichnen und Formaldehyd wird als giftig und vermutlich krebserzeugend eingestuft.

Eine Exposition von Menschen mit diesen Stoffen beispielsweise während der Produktion oder nach einem Bersten der Brandschutzglasscheibe im Brandfall ist daher schädlich und sollte vermieden werden.

Des Weiteren ist bei der Herstellung der Brandschutzverglasungen auf Basis von Hydrogelen grosse Eile geboten, sobald der Polymerisationsinitiator zu den Edukten des Gels zugegeben wird, da die Vernetzung und damit die Aushärtung des Gels sofort beginnt. Dies ist besonders nachteilig, wenn die Edukte oder ein Teil der Edukte toxisch sind, da in Hektik durchgeführte Tätigkeiten sehr viel fehleranfälliger sind.

Es ist deshalb Aufgabe der Erfindung, eine Brandschutzverglasung und ein Verfahren zu ihrer Herstellung zu schaffen, welche die oben genannten Nachteile beheben.

Diese Aufgaben lösen eine Brandschutzverglasung und ein Verfahren zur Herstellung einer Brandschutzverglasung wie in den Patentansprüchen definiert.

Die Brandschutzverglasung weist mindestens zwei transparente Träger auf, zwischen denen eine transparente Schicht aus einer Brandschutzschicht angeordnet ist. Die Brandschutzschicht weist ein Hydrogel auf. Dieses weist ein aus mindestens einem monofunktionellen Monomer sowie mindestens einem bi- oder polyfunktionellen Monomer in einer wässrigen Salzlösung oder in einer wässrigen Salzdispersion in einem sauren Milieu polymerisiertes Polymer auf und enthält 5 - 20 Gew.-% Salz.

Die Monomere sind nicht toxisch, nicht cancerogen und nicht mutagen. Dabei ist eine Polymerisation des Polymers aus den Monomeren thermisch aktivierbar, und die thermische Aktivierung setzt oberhalb der Raumtemperatur ein. Die monofunktionellen Monomere weisen mindestens Acrylsäure oder ein Acrylsäurederivat und Methacrylamid oder ein Derivat des Methacrylamids auf.

Als transparente Träger kommen insbesondere Glasscheiben, im Speziellen flache Glasscheiben in Frage. Auch Keramikgläser können verwendet werden und spezielle gebogene Gläser Anwendung finden. Besonders günstig können thermisch oder eventuell chemisch vorgespannte Glasscheiben sein. Als Alternativen zu Glasscheiben auf Siliziumoxidbasis kommen auch transparente Träger auf Polymerbasis (bspw. aus Polycarbonaten oder Poly-Methyl-Methacrylat (PMMA; Acrylglas), teilweise kristalline "Gläser" (Keramikgläser) oder Verbundsysteme mit Glasscheiben und Kunststoffträgern in Frage.

Der Begriff "Brandschutzverglasung" ist folglich funktionell und nicht als auf bestimmte Materialien (konkret: Glas im engeren Sinn) eingeschränkt zu verstehen sondern beinhaltet ausdrücklich auch Aufbauten mit transparenten oder transluzenten Trägern aus den vorstehend genannten und anderen Materialien.

Ein Hydrogel ist ein Wasser enthaltendes, aber wasserunlösliches (aber wasserkompatibles) Polymer, dessen Monomere zu einem dreidimensionalen Netzwerk verknüpft sind. Eine saure Lösung weist einen pH-Wert < 7 auf. Besonders bevorzugt ist das Hydrogel in einer Lösung mit einem pH-Wert von weniger als 6.5 polymerisiert, bspw. einem pH-Wert von höchstens 6 oder beispielsweise bei einem pH-Wert von höchstens 4.7.

Ein nicht toxisches Monomer ist beispielsweise eine chemische Verbindung, die gemäss dem global harmonisierten System zur Einstufung und Kennzeichnung von Chemikalien (GHS, Globally Harmonized System of Classification, Labelling and Packaging of Chemicals) der Vereinten Nationen nicht in die Gefahrenklasse "Akute Toxizität" mit der Gefahrenbezeichnung giftig (Kennbuchstabe: T) oder sehr giftig (Kennbuchstabe: T+) eingestuft wird. Ebenso sind die genannten monofunktionellen und bspw. auch bi- oder polyfunktionellen Monomere der Brandschutzschicht nicht als cancerogen (krebserzeugend) und/oder mutagen (erbgutschädigend) eingestuft.

Eine der Erfindung zugrunde liegende Erkenntnis ist, dass es möglich ist, dass die Brandschutzschicht sowohl vor der Umsetzung zu einem Hydrogel (Edukte) als auch fertig umgesetzte Hydrogel nicht toxisch ist. Das hat den Vorteil, dass auch im Brandfall die Entstehung von toxischen Verbindungen verringert ist. Dadurch ist sowohl ein Arbeiter, der bei einer Herstellung der Brandschutzschicht beteiligt ist, als auch eine Person im Brandfall oder beim Bruch der Brandschutzscheiben während der Verwendung besser vor Vergiftungen geschützt.

Des Weiteren wird es ermöglicht, dass die polymerisierte Brandschutzschicht einen pH-Wert kleiner sieben aufweist. Es wurde überraschenderweise gefunden, dass damit markante Vorteile erzielt werden können. Erstens bildet die Brandschutzschicht eine polare Oberfläche. Die Polarität der Brandschutzschicht wird durch die Polarität der Liganden in der Polymerkette beeinflusst. Diese polare Oberfläche kann mit der Oberfläche der Glasscheibe effizient wechselwirken, wodurch die Haftung der der Brandschutzschicht an der Glasscheibe stark verbessert wird. Die verbesserte Haftung kann insbesondere im Brandfall von grosser Bedeutung sein, da die Brandschutzschicht nach einem Zerspringen oder Platzen der feuerseitigen Glasscheibe mit der weiteren Glasscheibe verbunden bleibt und nicht einfach in den Brandraum fällt (was einem Totalversagen der Brandschutzverglasung entsprechen würde). Diese verbesserte Haftung wird bereits ohne die Verwendung zusätzlicher Haftvermittler erreicht.

Ein weiterer Vorteil einer Brandschutzschicht mit einen pH-Wert < 7 ist zweitens, dass im saueren Milieu die Glasscheibe, die mit der Brandschutzschicht in Berührung kommt, im Vergleich zum Stand der Technik weniger stark angegriffen wird, da eine sogenannte Glaskorrosion im Sauren weniger stark als im Alkalischen stattfindet. Dadurch wird einer alterungsbedingten Trübung des Glases/ der Glasscheibe vorgebeugt.

Als bifunktionelles Monomer kann beispielsweise Methylenbisacrylamid (MBA) verwendet werden. Das bi- oder polyfunktionelle Monomer bewirkt oder beschleunigt eine dreidimensionale Vernetzung der Brandschutzschicht. Dadurch wird es möglich, dass die Brandschutzschicht nach der Polymerisation nicht mehr fliessfähig ist. Daher wird die Formstabilität der Brandschutzschicht und damit der Brandschutzverglasung erheblich verbessert.

Das Initiieren der Polymerisation kann durch einen Initiator gefördert werden. Der Initiator kann beispielsweise ein wasserlöslicher UV-Initiator einer UV-Radikal-Ketten-Polymerisation (nach Bestrahlung mit ultravioletter Strahlung) sein.

Vorteilhafterweise ist der Initiator (bzw. allgemein die Polymerisation) thermisch aktivierbar. Dadurch wird es möglich, dass nur ein Initiator für ein Initiieren der Polymerisation der Brandschutzschicht benötigt wird. Im Gegensatz dazu sind Initiatoren bekannt die als Redoxsystem wirken und mindestens zwei Reaktionspartner aufweisen. Durch die Verwendung von weniger Ausgangsstoffen/Ausgangsmaterialien (Edukten) für die Brandschutzschicht kann eine Homogenisierung der Edukte leichter erzielt werden, wodurch die Effizient der Polymerisierung und somit die Qualität der Brandschutzverglasung verbessert wird.

Die thermische Aktivierung setzt bevorzugt oberhalb der Raumtemperatur ein, (die Norm-Raumtemperatur ist definiert als 23°C). Dadurch wird es möglich, dass beim Homogenisieren der Edukte (inklusive des Initiators) bei Raumtemperatur noch keine Polymerisation stattfindet. Daher ist bei der sorgfältigen Herstellung der Brandschutzverglasung keine Eile geboten, was die Fehleranfälligkeit reduziert und im Produktionsprozess eine zusätzliche Flexibilität ermöglicht.

Die Brandschutzmasse, welche nach dem Polymerisieren die Brandschutzschicht bildet (d.h. das Hydrogel, eventuell mit Zusätzen) ist also insbesondere bevorzugt so ausgebildet, dass bei Raumtemperatur im Wesentlichen keine Polymerisation stattfindet. "Im Wesentlichen keine Polymerisation" kann beispielsweise bedeuten, dass die Viskosität des Hydrogels innerhalb von 12 Stunden nicht einen Wert von 200 mPa s erreicht oder übersteigt. Mit anderen Worten: die Edukte der Brandschutzschicht härten nicht innerhalb einer annehmbaren Zeitdauer (ca. 12 Stunden) aus, ohne dass sie eine thermische Aktivierung erfahren.

Vorteilhafterweise liegt die Aktivierungstemperatur für das Initiieren der Polymerisation unterhalb von 100°C. Dadurch wird eine Blasenbildung in der Brandschutzschicht durch eventuell verdampfendes Wasser unterbunden. Beispielsweise kann es vorteilhaft sein, wenn die Polymerisation bei einer Temperatur von 40°C bis 75°C startet. Als Aktivierungstemperatur kann beispielsweise die tiefste Temperatur angesehen werden, bei welcher die Viskosität der frisch zusammengemischten Masse innert 1 bis zwei Stunde um einen Faktor 1000 zunimmt, dass heisst eine Viskosität von 400 mPa s erreicht. Bei einer Viskosität von 400 mPa s und mehr lässt sich die Brandschutzmasse nicht oder kaum noch verarbeiten und kann dann auch nahezu nicht mehr fliessen.

Wird für das Initiieren einer Polymerisation der Brandschutzschicht nur ein einziger Initiator verwendet, kann auf einen Reaktionspartner für den Initiator verzichtet werden. Dadurch muss man bei einer Zusammenstellung der Brandschutzschicht nicht auf ein Einstellen eines Redoxsystems achten, wobei beispielsweise ein Überschuss eines Reaktionspartners zu unerwünschten Nebenreaktionen führen kann.

Als Initiator kann ein Persalz verwendet werden, insbesondere sind Peroxidisulfate für das Initiieren der Polymerisation gut geeignet. Persalze sind die Salze einer Persäure, wobei der Begriff Persäure eine Sammelbezeichnung ist. Unter Persäure kann man sowohl Oxosäuren höheren Sauerstoffgehalts als auch Peroxosäuren (, sowie Peroxy-carbonsäuren verstehen. Persalze sind starke Oxidationsmittel die in einem Redoxsystem mit einem Reduktionsmittel die radikalische Umsetzung der Edukte des Hydrogels zu einem Polymer initiieren können. Insbesondere Peroxidisulfate sind auch thermisch aktivierbar.

Ein weiterer wesentlicher Vorteil ist, dass die Aktivierung gezielt stattfinden kann, wenn sich die Edukte der Brandschutzschicht an ihrem Bestimmungsort beispielsweise zwischen den mindestens zwei Glasscheiben befinden. Dadurch kann die Verarbeitung wie beispielsweise das Mischen und Homogenisieren der Edukte sowie das Einfüllen der Edukte zwischen die mindestens zwei Glasscheiben mit grosser Sorgfalt und ohne Hast ausgeführt werden. Daher kann die Qualität der Brandschutzverglasung reproduzierbar auf einem hohen Niveau gesichert werden.

Des Weiteren können - dies betrifft unterschiedliche Ausführungsformen der Erfindung, nicht nur mit thermischer Aktivierung - die mindestens zwei Glasscheiben der Brandschutzverglasung an der der Brandschutzschicht zugewandten Seite eine Schicht aus organofunktionellem Silan aufweisen. Das organofunktionelle Silan kann beispielsweise durch ein Aufsprühen, eine Walzenapplikation oder durch ein Aufwischen auf die Glasscheibe aufgebracht werden.

Dadurch wird es möglich, dass die Haftung der Brandschutzschicht an der Glasscheibe noch weiter verbessert wird. Die weiter verbesserte Haftung wirkt sich vorteilhaft auf die Brandschutzeigenschaften der Brandschutzverglasung aus, da im Brandfall nach einem Abplatzen der dem Feuer zugewandten Glasscheibe die Brandschutzschicht an der mindestens einen verbleibenden Glasscheibe haften bleibt und eine Hitzedämmung bieten. Das organofunktionelle Silan kann auch als funktionalisiertes Silan bezeichnet werden.

Vorteilhafterweise ist die Schicht aus organofunktionellem Silan eine monomolekulare Schicht. Dies kann mit Hilfe einer stark verdünnten Lösung des funktionalisierten Silans in einem leicht flüchtigen Lösungsmittel, wie beispielsweise Propanol oder Isopropanol, oder ein Propanol-Wasser-Gemisch, realisiert werden. Durch die monomolekulare Schicht kann eine direkte und stabile Verbindung mit der Glasscheibe hergestellt werden, da keine Zwischenschichten, diese Verbindung beeinträchtigen.

Des Weiteren kann das organofunktionelle Silan mit der Brandschutzschicht eine kovalente Bindung eingehen. Eine solche kovalente Bindung kann im Gegensatz zu rein polaren Wechselwirkungen nur durch grossen Energieaufwand gebrochen werden. Dadurch haftet die Brandschutzschicht besonders gut an der beschichteten Glasscheibe. Bei einem Brand steht sehr viel Wärmeenergie zur Verfügung, wodurch einerseits die kovalenten Bindungen zwischen Brandschutzschicht und dem funktionalisierten Silan auf der dem Feuer zugewandten Seite gebrochen werden und sich die eventuelle abplatzende Glasscheibe von der Brandschutzschicht lösen kann. Andererseits bleiben die Bindung zwischen Brandschutzschicht und dem funktionalisierten Silan auf der dem Feuer abgewandten Seite bestehen, wodurch die Hitzedämmung der Brandschutzverglasung weiterhin aufrechterhalten wird.

Weist das organofunktionelle Silan mindestens eine Doppelbindung an der der Glasscheibe abgewandten Seite auf, kann die initiierte Polymerisation nicht nur innerhalb der Brandschutzschicht stattfinden, sondern auch auf das funktionalisierte Silan übergreifen. Durch diese Vernetzung zwischen Brandschutzschicht und funktionalisiertes Silan und damit mit der Glasscheibe haftet die Brandschutzschicht besonders gut an der Glasscheibe, was die bereits erwähnten Vorteile mit sich bringt. Ein solches funktionalisiertes Silan mit mindestens einer Doppelbindung kann beispielsweise ein Vinylsilan sein.

Die wasserlöslichen, nicht toxischen Monomere aus denen die Brandschutzschicht umgesetzt wird, weisen in einer Gruppe von Ausführungsformen mindestens Acrylsäure oder ein Acrylsäurederivat und Methacrylamid oder ein Derivat des Methacrylamids auf. Dadurch kann auf die Verwendung von toxischem Acrylamid verzichtet werden und sichergestellt werden, dass wie bereits erwähnt auch das fertig umgesetzte Hydrogel nicht toxisch ist und im Brandfall die Entstehung von toxischen Stoffen stark reduziert werden kann.

Die Brandschutzschicht vor der Umsetzung kann einen Anteil von 5-20 Gewichtsprozent an Monomeren aufweisen. Dadurch kann eine gute dreidimensionale Vernetzung gewährleistet werden, wodurch die Formstabilität der Brandschutzschicht massgeblich verbessert wird. Insbesondere kann der Anteil der Monomere auch in zwischen 7 und 15 Gewichtsprozent der Brandschutzschicht vor einer Umsetzung betragen, wobei die Vernetzung besonders gut ist. Dabei ist es vorteilhaft, dass die Monomere sowohl Acrylsäure oder ein Acrylsäurederivat aufweisen als auch Methacrylamid oder ein Derivat des Methacrylamids aufweisen. Dadurch wird es möglich die dreidimensionale Vernetzung der Brandschutzschicht zu verbessern. In diesem Fall gilt also für den Anteil von Acrylsäure und/oder Acrylsäurederivat plus Methacrylamid und/oder ein Methacrylamidderivat, dass dieser zwischen 5 und 20% (Angaben jeweils in Gewichtsprozenten), bevorzugt zwischen 7 und 15%, besonders bevorzugt zwischen 8 und 12% liegt. Das Verhältnis zwischen Methacrylamid und/oder ein Methacrylamidderivat einerseits und Acrylsäure und/oder Acrylsäurederivat andererseits liegt bevorzugt zwischen 0.5 und 2.5, insbesondere zwischen 0.8 und 1.5, besonders bevorzugt zwischen 1 und 1.2.

Für die Anteile weiterer Bestandteile der Brandschutzmasse gilt:
- Wasseranteil zwischen 60-90%, bevorzugt zwischen 70-85%, insbesondere zwischen 75-82%.
- Salz (bspw. NaCl oder ein anderes Alkalisalz oder Erdalkalisalz) 5-20% bevorzugt zwischen 5 und 15%, insbesondere zwischen 8 und 13%.
- Lauge (bspw. NaOH oder KOH oder Kaliumcarbonat etc.) bevorzugt maximal 5%, insbesondere zwischen 0 und 4%, oder zwischen 0.8 und 2.5%, bspw. zwischen 1% und 2%.
- bi- oder polyfunktionelles Monomer (zum Beispiel Methylenbisacrylamid MBA) beispielsweise maximal 1.5%, insbesondere zwischen 0% oder 0.05% und 0.5% oder zwischen 0.07% und 0.25%. Das Molverhältnis zwischen monofunktionellem Monomer(en) einerseits und bi- oder polyfunktionellem Monomer andererseits ist beispielsweise zwischen 40 und 1000, insbesondere zwischen 70 und 300.
- Initiator: bspw. maximal 1%, insbesondere zwischen 0.05% und 0.4% oder zwischen 0.07% und 0.25%.

Die Brandschutzschicht kann auch nach der Polymerisation einen pH-Wert kleiner 7 aufweisen. Dadurch wird die Haftung am Glas aufgrund von polaren Wechselwirkungen unterstützt. Für die Verbesserung der Haftung wird dabei nicht zwingend an der der Brandschutzschicht zugewandten Seite eine Schicht aus organofunktionellem Silan benötigt. Im Basischen (pH > 7) kann es zu einer Degenerierung der Bindungen zwischen der Brandschutzschicht und einer eventuell aufgetragenen Schicht aus funktionalisiertem Silan kommen, wodurch die Haftung an der Glasscheibe im Basischen reduziert wird. Ausserdem, wird im Sauren (pH < 7) wie erwähnt die sogenannte Glaskorrosion verringert, wodurch die Brandschutzverglasung eine grössere Alterungsbeständigkeit zeigt.

Das Verfahren zur Herstellung einer Brandschutzverglasung weist die folgenden Schritte auf:
- Bereitstellen einer Brandschutzmasse mit wasserlöslichen, nicht toxischen Monomeren sowie mindestens einem bi- oder polyfunktionellem Monomer und mindestens einem Initiator in einer wässrigen Salzlösung oder in einer wässrigen Salzdispersion im sauren Milieu;
- Bereitstellen von mindestens einem ersten transparenten Träger (bspw. einer Glasscheibe) und mindestens einer entlang der Kante des ersten Trägers umlaufenden Randbegrenzung, so, dass der erste Träger und die Randbegrenzung ein Behältnis bilden;
- Einfüllen der Brandschutzmasse in das Behältnis; und
- kontrolliertes Starten einer Polymerisation der Brandschutzmasse zu einer Hydrogel-Brandschutzschicht die 5-20 Gew.-% Salz aufweist,
wobei der erste Träger oder mindestens einer der Träger als Glasscheibe ausgebildet ist, und wobei in einem zusätzlichen Schritt auf die mindestens eine Glasscheibe an einer der Brandschutzschicht zugewandten Seite eine Schicht aus organofunktionellem Silan aufgetragen wird, bevor die Glasscheibe mit der Brandschutzmasse in Kontakt gebracht wird.

Das Behältnis kann gemäss einer ersten Möglichkeit durch den ersten transparenten Träger und zusätzlich einen zweiten transparenten Träger (bspw. ebenfalls eine Glasscheibe) mit einer umlaufenden Randabdichtung gebildet werden, wobei die Randabdichtung an mindestens einer Stelle unterbrochen ist um eine Einfüllöffnung zu bilden. Nach dem Einfüllen wird dann die Randabdichtung so ergänzt, dass die Einfüllöffnung verschlossen wird. Dieses Verfahren hat den Vorteil, dass auch während der Herstellung platzsparende Anordnungen von mehreren Brandschutzverglasungen möglich sind. Ein mögliches Beispiel eines solchen Einfüllschrittes wird (für eine andere Brandschutzmasse als im erfindungsgemässen Verfahren) beispielsweise in WO 03/031173 gelehrt.

Es ist auch nicht ganz ausgeschlossen, dass gemäss einer weiteren Ausführungsform der erste transparente Träger (Glasscheibe oder ähnlich) mit einer umlaufenden Randbegrenzung horizontal abgelegt werden kann, so dass das Behältnis in der Art einer Wanne durch Träger und Randbegrenzung gebildet und befüllt wird. Die Brandschutzmasse kann anschliessend ausgehärtet und gegebenenfalls dabei auch getrocknet werden, woraufhin ein zweiter transparenter Träger darauf gelegt und bei Bedarf eine Randabdichtung angebracht wird (die Randabdichtung kann auch mindestens teilweise durch die Randbegrenzung gebildet werden, die dann auf dem ersten Träger verbleibt). Es ist auch ein Anbringen des zweiten Trägers vor oder während des Aushärtens möglich. Dieses Verfahren kann bspw. unter Schutzgas ausgeführt werden, damit kein Luftsauerstoff die Polymerisation behindern kann.

Durch dieses Vorgehen wird es möglich, dass das die Polymerisation erst dann kontrolliert gestartet werden kann, wenn die Edukte der Brandschutzschicht homogenisiert und an Ort und Stelle in Kontakt mindestens mit dem ersten Träger sind. Dadurch können die Arbeitsschritte beim Herstellen der Brandschutzverglasung mit grosser Sorgfalt ausgeführt werden, wodurch die Reproduzierbarkeit der Qualität gesichert werden kann.

Das kontrollierte Starten der Polymerisation kann durch ein Erwärmen der Brandschutzschicht initialisiert werden. Dadurch wird eine homogene Polymerisation der Brandschutzschicht beispielsweise im Raum zwischen den mindestens zwei Glasscheiben gewährleistet. Dabei darf die Temperatur, wie bereits erwähnt, nicht zu hoch gewählt werden, damit eine Blasenbildung in der Brandschutzschicht verhindert wird.

Das erfindungsgemäße Verfahren umfasst einen Schritt, bei dem der erste Träger oder mindestens einer der Träger als Glasscheibe (vorgespanntes oder nicht vorgespanntes oder laminiertes Glas) ausgebildet ist. Gemäss diesem Schritt wird, bevor die entsprechende Glasscheibe in Kontakt mit der Brandschutzmasse kommt, auf die Glasscheibe bzw. mindestens eine der Glasscheiben an der der Brandschutzschicht zugewandten Seite eine Schicht aus organofunktionellem Silan aufgetragen. Dadurch kann die Haftung der Brandschutzschicht an der Glasscheibe verstärkt werden, wodurch die Brandschutzeigenschaften der Brandschutzverglasung verbessert werden.

Das Vorgehen gemäss der Erfindung lässt sich selbstverständlich nicht nur auf Brandschutzverglasungen mit zwei transparenten Trägern und einer Brandschutzschicht dazwischen, sondern auf jegliche Aufbauten mit transparenten Trägern und Brandschutzschicht anwenden, insbesondere auch Aufbauten mit mehr als zwei Trägern und mehr als einer Brandschutzschicht.

Weitere Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:

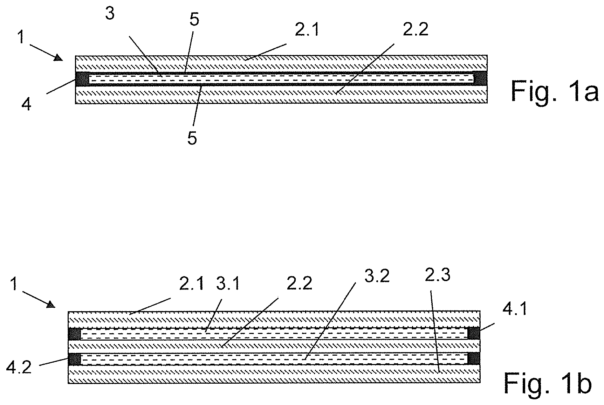

- Figuren 1a und 1b: verschiedene Aufbauten einer Brandschutzverglasung;

Grundsätzlich sind in den Figuren gleiche oder analoge Teile mit gleichen Bezugszeichen versehen.

Die Figuren 1a und 1b zeigen schematischen den Aufbau einer Brandschutzverglasung 1 welche eine Brandschutzschicht 3 auf der Basis eines Hydrogels aufweist. Die Figuren zeigen:
- Figur 1a eine Brandschutzverglasung 1 mit zwei Glasscheiben 2.1, 2.2 mit dazwischen angeordneter Brandschutzschicht 3 mit Randabdichtung 4; die Brandschutzverglasung kann bspw. durch Aushärten der Edukte der Brandschutzschicht 3 hergestellt werden, welche zunächst flüssig in den mit Hilfe der Randabdichtung 4 (Randverbund) definierten Zwischenraum zwischen die Glasscheiben 2.1, 2.2 und eingefüllt und dort thermisch ausgehärtet werden. Die Glasscheiben 2.1, 2.2 weisen an der der Brandschutzschicht 3 zugewandten Seite eine Schicht aus organofunktionellem Silan 5 auf. Diese Schicht aus organofunktionellem Silan 5 kann alternativ auch nur auf einer der beiden Glasscheiben aufgetragen sein.
- Figur 1b eine Brandschutzverglasung 1 mit drei Glasscheiben 2.1, 2.2, 2.3 mit dazwischen angeordneten Brandschutzschichten 3.1, 3.2, hier jeweils mit Randabdichtung 4.1, 4.2; auch Brandschutzverglasungen 1 mit mehr als drei Glasscheiben 2.1, 2.2, 2.3 und mehr als zwei Brandschutzschichten 3.1, 3.2 sind möglich.

Auch Aufbauten mit mehr als drei Glasscheiben, mehr als zwei Brandschutzschichten und/oder mit anderen transparenten Trägern als Glasscheiben und/oder mit zusätzlichen transparenten Schichten - wie bspw. in DE 20 2012 012 285.1 beschrieben - sind möglich.

Nachfolgend sind einige Beispiele für die Herstellung einer Brandschutzverglasung 1 wiedergegeben.

### Beispiel 1

| Eine Brandschutzmasse wird aus folgenden Komponenten gemischt: | |
|---|---|
| 5,42 w[%] | Methacrylamid |
| 4,58 w[%] | Acrylsäure |
| 0,17 w[%] | Methylenbisacrylamid (MBA) |
| 10,00 w[%] | NaCl |
| 1,50 w[%] | NaOH |
| 78,16 w[%] | Wasser |
| 0,17 w[%] | Initiator (Peroxidsulfat) |

### Beispiel 2 (Vergleichsbeispiel)

| Zunächst werden die Edukte der Brandschutzschicht 3 zu einer Brandschutzmasse mit den folgenden Gewichtsprozenten gemischt: | |
|---|---|
| 5,4 w[%] | Methacrylamid |
| 4,6 w[%] | Acrylsäure |
| 0,15 w[%] | Methylenbisacrylamid (MBA) |
| 2,5 w[%] | KCl |
| 0,1 w[%] | NaOH |
| 87,1 w[%] | Wasser |
| 0,15 w[%] | Initiator (Peroxidsulfat) |

Der pH-Wert dieser sauren Mischung beträgt circa 4.5. Anschliessend wird die Mischung in den Raum, der durch die Randabdichtung zwischen zwei Glasscheiben abgrenzt ist, eingefüllt. Während einer Zeit von 400 Minuten in einem Ofen bei 60°C wird eine Polymerisation initiiert, und die Brandschutzschicht härtet zwischen den beiden Glasscheiben aus.

### Beispiel Silanisierung

2 g Vinylsilan (Vinyltriethoxysilan) werden in 100 ml eines 1/1 Wasser/Propanol Gemischs gelöst. Die Lösung wird auf zwei ausgehärtete Glasscheiben gesprüht. Nach einer Trockenzeit von 5 Minuten wird eine erste Glasscheibe mit einer zweiten Glasscheibe über eine Randabdichtung verbunden (Randverbund). In dem so entstandenen Hohlraum wird die in Beispiel 1 aufgeführte Mischung der Edukte der Brandschutzschicht 3 eingefüllt.

Der mit der Brandschutzschicht gefüllte Verbund wird bei 55°C für 500 Minuten in einem Ofen erwärmt. Die Polymerisation der Edukte des Hydrogels wird durch das Erwärmen initiiert und die Brandschutzschicht härtet im Scheibenzwischenraum aus.

## Patentansprüche

1. Brandschutzverglasung mit mindestens zwei transparenten Trägern, zwischen denen eine transparente Brandschutzschicht angeordnet ist,
wobei die Brandschutzschicht ein Hydrogel aufweist, und
wobei das Hydrogel ein Polymer und **5-20 Gew.-% Salz** aufweist und das Polymer aus mindestens einem monofunktionellem Monomer sowie mindestens **einem bi- oder polyfunktionellem Monomer** in einer wässrigen Salzlösung oder in einer wässrigen Salzdispersion in einem sauren Milieu polymerisiert ist, wobei die Monomere nicht toxisch, nicht cancerogen und nicht mutagen sind,
und
wobei die mindestens zwei transparenten Träger an der der Brandschutzschicht **zugewandten Seite eine Schicht aus organofunktionellem Silan** aufweisen.

2. Brandschutzverglasung gemäss Anspruch 1, **dadurch gekennzeichnet, dass** die Schicht aus organofunktionellem Silan eine monomolekulare Schicht ist.

3. Brandschutzverglasung gemäss einem der vorherigen Ansprüche, **dadurch gekennzeichnet, dass** das organofunktionelle Silan mit der Brandschutzschicht eine kovalente Bindung eingeht.

4. Brandschutzverglasung gemäss einem der vorherigen Ansprüche, **dadurch gekennzeichnet, dass** das organofunktionelle Silan mindestens eine Doppelbindung an der der Glasscheibe abgewandten Seite aufweist, wobei das organofunktionelle Silan insbesondere ein Vinylsilan ist.

5. Brandschutzverglasung gemäss einem der vorherigen Ansprüche, **dadurch gekennzeichnet, dass** bei einer Polymerisation des Polymers zusätzlich ein Initiator vorhanden ist.

6. Brandschutzverglasung gemäss einem der vorherigen Ansprüche, **dadurch gekennzeichnet, dass** eine Polymerisation des Polymers aus den Monomeren thermisch aktivierbar ist, wobei die thermische Aktivierung oberhalb der Raumtemperatur einsetzt.

7. Brandschutzverglasung gemäss Anspruch 6, **dadurch gekennzeichnet, dass** eine Aktivierungstemperatur für das Initiieren der Polymerisation unterhalb von 80°C, insbesondere in einem Bereich von 25°C bis 80°C, insbesondere in einem Bereich von 40°C bis 75°C, liegt.

8. Brandschutzverglasung gemäss einem der vorherigen Ansprüche, **dadurch gekennzeichnet, dass** der Initiator ein Persalz, insbesondere ein Peroxidisulfat, aufweist.

9. Brandschutzverglasung gemäss einem der vorherigen Ansprüche, **dadurch gekennzeichnet, dass** die monofuntionellen Monomere mindestens Acrylsäure oder ein Acrylsäurederivat und Methacrylamid oder ein Derivat des Methacrylamids aufweisen, wobei die monofunktionellen Monomere einen Anteil von 5-20 Gewichtsprozent insbesondere einen Anteil von 7-15 Gewichtsprozent an den Edukten der Brandschutzschicht aufweisen.

10. Brandschutzverglasung gemäss einem der vorherigen Ansprüche **dadurch gekennzeichnet, dass** die polymerisierte Brandschutzschicht einen pH-Wert kleiner 7 aufweist.

11. Verfahren zur Herstellung einer Brandschutzverglasung aufweisend die Schritte
- Bereitstellen einer Brandschutzmasse mit wasserlöslichen, nicht toxischen, nicht cancerogen und nicht mutagenen monofunktionellen Monomeren sowie mindestens einem bi- oder polyfunktionellem Monomer und mindestens einem Initiator in einer wässrigen Salzlösung oder in einer wässrigen Salzdispersion im sauren Milieu;
- Bereitstellen von mindestens einem ersten transparenten Träger und mindestens einer entlang der Kante des ersten Trägers umlaufenden Randbegrenzung, so, dass der erste Träger und die Randbegrenzung ein Behältnis bilden;
- Einfüllen der Brandschutzmasse in das Behältnis; und
- kontrolliertes Starten einer Polymerisation der Brandschutzmasse zu einer Hydrogel-Brandschutzschicht die 5-20 Gew.-% Salz aufweist,
wobei der erste Träger oder mindestens einer der Träger als Glasscheibe ausgebildet ist, und wobei in einem zusätzlichen Schritt auf die mindestens eine Glasscheibe an einer der Brandschutzschicht zugewandten Seite eine Schicht aus organofunktionellem Silan aufgetragen wird, bevor die Glasscheibe mit der Brandschutzmasse in Kontakt gebracht wird.

12. Verfahren gemäss Anspruch 11, **dadurch gekennzeichnet, dass** der erste transparente Träger zusammen mit mindestens einem zweiten, vom ersten Träger beabstandeten zweiten transparenten Träger bereitgestellt wird, wobei die Randbegrenzung eine zwischen der ersten und zweiten Glasscheibe entlang deren Kante umlaufende Randabdichtung ist und die Brandschutzmasse vor einem Polymerisieren einen Raum zwischen dem ersten und zweiten Träger gebildeten, das Behältnis bildenden Raum eingefüllt wird.

13. Verfahren gemäss einem der Ansprüche 11-12, **dadurch gekennzeichnet, dass** das kontrollierte Starten der Polymerisation durch ein Erwärmen der Brandschutzmasse auf eine Temperatur oberhalb der Raumtemperatur initialisiert wird.

14. Verfahren nach einem der Ansprüche 11-13, wobei in der Brandschutzmasse enthaltene, bei der Polymerisation zu einem Polymer polymerisierende Monomere mindestens Acrylsäure oder ein Acrylsäurederivat und Methacrylamid oder ein Derivat des Methacrylamids aufweisen.

## Claims

1. Fire-resistant glazing comprising at least two transparent supports between which a transparent fire-resistant layer is arranged,
wherein the fire protection layer comprises a hydrogel, and
wherein the hydrogel comprises a polymer and **5-20 wt.% salt,** and the polymer is polymerized from at least one monofunctional monomer and at least **one bifunctional or polyfunctional monomer** in an aqueous salt solution or in an aqueous salt dispersion in an acidic environment,
wherein the monomers are non-toxic, non-carcinogenic, and non-mutagenic,
and
wherein the at least two transparent carriers have a **layer of organofunctional silane** on the **side facing** the fire protection layer.

2. Fire-resistant glazing according to claim 1, **characterized in that** the layer of organofunctional silane is a monomolecular layer.

3. Fire-resistant glazing according to one of the previous claims, **characterized in that** the organofunctional silane forms a covalent bond with the fire-resistant layer.

4. Fire-resistant glazing according to one of the previous claims, **characterized in that** the organofunctional silane has at least one double bond on the side facing away from the glass pane, wherein the organofunctional silane is in particular a vinyl silane.

5. Fire-resistant glazing according to one of the previous claims, **characterized in that** an initiator is additionally present during polymerization of the polymer.

6. Fire-resistant glazing according to one of the previous claims, **characterized in that** polymerization of the polymer from the monomers is thermally activatable, wherein thermal activation begins above room temperature.

7. Fire-resistant glazing according to claim 6, **characterized in that** an activation temperature for initiating the polymerization is below 80°C, in particular in a range from 25°C to 80°C, in particular in a range from 40°C to 75°C.

8. Fire-resistant glazing according to one of the previous claims, **characterized in that** the initiator comprises a persalt, in particular a peroxydisulfate.

9. Fire-resistant glazing according to one of the previous claims, **characterized in that** the monofunctional monomers comprise at least acrylic acid or an acrylic acid derivative and methacrylamide or a derivative of methacrylamide, wherein the monofunctional monomers comprise 5-20% by weight, in particular 7-15% by weight, of the reactants of the fire-resistant layer.

10. Fire-resistant glazing according to one of the preceding claims, **characterized in that** the polymerized fire-resistant layer has a pH value of less than 7.

11. Method for producing fire-resistant glazing comprising the steps
- providing a fire protection compound with water-soluble, non-toxic, non-carcinogenic and non-mutagenic monofunctional monomers and at least one bi- or polyfunctional monomer and at least one initiator in an aqueous salt solution or in an aqueous salt dispersion in an acidic environment;
- providing at least one first transparent carrier and at least one edge boundary extending along the edge of the first carrier so that the first carrier and the edge boundary form a container;
- Filling the fire protection compound into the container; and
- controlled initiation of a polymerization of the fire protection compound to form a hydrogel fire protection layer containing 5-20% by weight of salt,
wherein the first carrier or at least one of the carriers is designed as a glass pane, and wherein, in an additional step, a layer of organofunctional silane is applied to the at least one glass pane on a side facing the fire protection layer before the glass pane is brought into contact with the fire protection compound.

12. Method according to claim 11, **characterized in that** the first transparent carrier is provided together with at least one second transparent carrier spaced apart from the first carrier, wherein the edge boundary is an edge seal extending between the first and second glass panes along their edge, and the fire protection compound is filled into a space formed between the first and second carriers, which space forms the container, before polymerization.

13. Method according to one of claims 11-12, **characterized in that** the controlled start of polymerization is initiated by heating the fire protection compound to a temperature above room temperature.

14. Method according to one of claims 11-13, wherein the fire-retardant mass contains monomers which polymerize to a polymer during polymerization, at least one of which is acrylic acid or an acrylic acid derivative and methacrylamide or a derivative of methacrylamide.

## Revendications

1. Vitrage coupe-feu comprenant au moins deux supports transparents entre lesquels est disposée une couche transparente coupe-feu,
la couche de protection contre l'incendie comportant un hydrogel, et
l'hydrogel comprenant un polymère et **5 à 20 % en poids de sel,** et le polymère étant polymérisé à partir d'au moins un monomère monofonctionnel et d'au moins **un monomère bifonctionnel ou polyfonctionnel** dans une solution saline aqueuse ou dans une dispersion saline aqueuse en milieu acide,
les monomères étant non toxiques, non cancérigènes et non mutagènes,
et
les au moins deux supports transparents comportant, sur la face tournée vers la couche de protection contre l'incendie, **une couche de silane organofonctionnel.**

2. Vitrage de protection contre l'incendie selon la revendication 1, **caractérisé en ce que** la couche de silane organofonctionnel est une couche monomoléculaire.

3. Vitrage de protection contre l'incendie selon l'une des revendications précédentes, **caractérisé en ce que** le silane organofonctionnel forme une liaison covalente avec la couche de protection contre l'incendie.

4. Vitrage de protection contre l'incendie selon l'une des revendications précédentes, **caractérisé en ce que** le silane organofonctionnel présente au moins une double liaison sur le côté opposé à la vitre, le silane organofonctionnel étant en particulier un vinylsilane.

5. Vitrage de protection contre l'incendie selon l'une des revendications précédentes, **caractérisé en ce qu'**un initiateur est également présent lors de la polymérisation du polymère.

6. Vitrage coupe-feu selon l'une des revendications précédentes, **caractérisé en ce qu'**une polymérisation du polymère à partir des monomères est activable thermiquement, l'activation thermique commençant au-dessus de la température ambiante.

7. Vitrage coupe-feu selon la revendication 6, **caractérisé en ce que** la température d'activation pour le déclenchement de la polymérisation est inférieure à 80 °C, en particulier comprise entre 25 °C et 80 °C, en particulier comprise entre 40 °C et 75 °C.

8. Vitrage de protection contre l'incendie selon l'une des revendications précédentes, **caractérisé en ce que** l'initiateur comprend un persel, en particulier un peroxydisulfate.

9. Vitrage de protection contre l'incendie selon l'une des revendications précédentes, **caractérisé en ce que** les monomères monofonctionnels contiennent au moins de l'acide acrylique ou un dérivé de l'acide acrylique et du méthacrylamide ou un dérivé du méthacrylamide, les monomères monofonctionnels représentant 5 à 20 % en poids, en particulier 7 à 15 % en poids, des réactifs de la couche de protection contre l'incendie.

10. Vitrage coupe-feu selon l'une des revendications précédentes, **caractérisé en ce que** la couche coupe-feu polymérisée présente un pH inférieur à 7.

11. Procédé de fabrication d'un vitrage coupe-feu comprenant les étapes suivantes
- la mise à disposition d'une masse de protection contre l'incendie comprenant des monomères monofonctionnels hydrosolubles, non toxiques, non cancérigènes et non mutagènes, ainsi qu'au moins un monomère bifonctionnel ou polyfonctionnel et au moins un initiateur dans une solution saline aqueuse ou dans une dispersion saline aqueuse en milieu acide ;
- fourniture d'au moins un premier support transparent et d'au moins une bordure périphérique s'étendant le long du bord du premier support, de telle sorte que le premier support et la bordure forment un récipient ;
- remplir le récipient avec la masse ignifuge ; et
- démarrage contrôlé d'une polymérisation de la masse ignifuge pour former une couche ignifuge hydrogel contenant 5 à 20 % en poids de sel,
le premier support ou au moins l'un des supports étant réalisé sous forme de vitre, et dans une étape supplémentaire, une couche de silane organofonctionnel étant appliquée sur la au moins une vitre, sur un côté tourné vers la couche de protection contre l'incendie, avant que la vitre ne soit mise en contact avec la masse de protection contre l'incendie.

12. Procédé selon la revendication 11, **caractérisé en ce que** le premier support transparent est fourni avec au moins un deuxième support transparent espacé du premier support, la bordure périphérique étant un joint d'étanchéité périphérique entre la première et la deuxième vitre le long de leur bord, et la masse ignifuge étant remplie avant polymérisation dans un espace formant le récipient entre le premier et le deuxième support.

13. Procédé selon l'une des revendications 11 à 12, **caractérisé en ce que** le démarrage contrôlé de la polymérisation est initialisé par un chauffage de la masse de protection contre l'incendie à une température supérieure à la température ambiante.

14. Procédé selon l'une des revendications 11 à 13, dans lequel les monomères d's contenus dans la masse de protection contre l'incendie et polymérisant lors de la polymérisation en un polymère contiennent au moins de l'acide acrylique ou un dérivé de l'acide acrylique et du méthacrylamide ou un dérivé du méthacrylamide.
